# EUROPEAN PATENT APPLICATION

(11) **EP 3 800 457 A1**
(43) Date of publication of application: **07.04.2021**
(21) Application number: 19201475.1
(22) Date of filing: 04.10.2019
(51) Int. Cl.: G01L 27/00

(54) **TESTING DEVICE AND METHOD FOR TESTING DIFFERENTIAL PRESSURE SENSORS**

(71) Applicant: Afore Oy, 21420 Lieto (FI)
(72) Inventor: HENTTONEN, Vesa, 20380 Turku (FI)
(74) Representative: Berggren Oy, Turku

(57) **Abstract**

The present invention provides a testing device that comprises a pressure chamber (107), means (108) for controlling the pressure in the pressure chamber (107), a chuck (101) inside the pressure chamber (107) for holding a sample (102) that comprises differential pressure sensors (103), and a probe card (104) inside the pressure chamber (107) for electrically contacting the differential pressure sensors (103). In the testing device according to the invention the chuck (101) comprises an air channel (110) having a first end in communication with the inside of the pressure chamber (107) and a second end in communication with the outside of the pressure chamber (107), wherein the first end is arranged in such a manner that the sample (102) when held on the chuck (101) closes the first end. The present invention also relates to a method for testing differential pressure sensors (103).

## Description

### TECHNICAL FIELD OF THE INVENTION

The present invention relates to a testing device and a method for testing differential pressure sensors according to the preambles of the appended independent claims.

### BACKGROUND OF THE INVENTION

Semiconductor device fabrication is a commonly used process for creating differential pressure sensors on a wafer made of a semiconductor material using multiple-step sequence of photolithographic and chemical processing steps. As a part of the process, the differential pressure sensors are typically tested for functional defects by applying special test patterns to them.

An exemplary device for testing differential pressure sensors comprises a chuck for holding a wafer that contains differential pressure sensors and a probe card for electrically contacting the differential pressure sensors on the wafer. The probe card is electrically connected to an electronic testing unit that electrically tests the differential pressure sensors according to a test program. The test program defines the contents of test patterns and the sequence by which they are applied to the differential pressure sensors. The chuck and the probe card are arranged inside a pressure chamber, the pressure of which can be controlled and set at a desired level. For electrical testing, the probe card is held in place while the wafer mounted on the chuck is moved between testing positions. In each testing position, contact elements of the probe card are arranged in electrical contact with contact pads of a set of differential pressure sensors, which are then electrically tested with the electronic testing unit.

A problem associated with this testing device is that its testing capability is limited because the pressure can only be controlled on one side of the differential pressure sensor, i.e. on the side which is not against the chuck.

### OBJECTIVES OF THE INVENTION

It is the main objective of the present invention to reduce or even eliminate the prior art problems presented above.

It is an objective of the present invention to provide a device and a method for testing differential pressure sensors. In more detail, it is an objective of the invention to provide a device and a method enabling to control the pressure on both sides of differential pressure sensors that are tested. It is a further objective of the invention to provide a device and a method enabling to accurately and reliably test differential pressure sensors.

In order to realise the above-mentioned objectives, the device and the method according to the invention are characterised by what is presented in the characterising portions of the appended independent claims. Advantageous embodiments of the invention are described in the dependent claims.

### DESCRIPTION OF THE INVENTION

A testing device according to the invention comprises a pressure chamber, means for controlling the pressure in the pressure chamber, a chuck inside the pressure chamber for holding a sample that comprises differential pressure sensors, and a probe card inside the pressure chamber for electrically contacting the differential pressure sensors. In the testing device according to the invention the chuck comprises an air channel having a first end in communication with the inside of the pressure chamber and a second end in communication with the outside of the pressure chamber, wherein the first end is arranged in such a manner that the sample when held on the chuck closes the first end.

The testing device according to the invention can be used for testing differential pressure sensors in a controlled pressure environment. By a differential pressure sensor is meant a sensor that measures the difference between two pressures, one connected to each side of the sensor. Differential pressure sensors can be used, for example, to measure pressure drops across a filter, fluid levels by comparing the pressure above and below the liquid or flow rates by measuring the change in pressure across a restriction. Differential pressure sensors (integrated circuits) can be created on a wafer made of a semiconductor material using multiple-step sequence of photolithographic and chemical processing steps.

The sample that comprises the differential pressure sensors to be tested is mounted on the chuck. The sample closes the first end of the air channel provided in the chuck so that first sides of the differential pressure sensors are in communication with the inside of the pressure chamber and second sides of the differential pressure sensors are in communication with the air channel. This enables to control the pressures prevailing on both sides of the differential pressure sensors, independently from each other.

The chuck and the probe card are arranged inside the pressure chamber, which can be made of stainless steel or aluminium. The pressure in the pressure chamber can be controlled with a pump that is provided with a pressure controller for adjusting the pressure. The pump can be connected to the pressure chamber with a connecting pipe or hose, or the like. During the testing of the differential pressure sensors, the pressure in the pressure chamber can be, for example, in the range of 0 to 2 bar, 2 to 10 bar, 10 to 30 bar, or more than 30 bar. The pressure in the pressure chamber is preferably larger than the pressure in the air channel. The second end of the air channel may be arranged in communication with atmosphere, whereby the pressure prevailing in the air channel is atmospheric pressure. Alternatively, the second end of the air channel can be closed and the pressure in the air channel can be controlled with suitable pressure controlling means.

The chuck is used to hold the sample during the testing of the differential pressure sensors. The sample can be, for example, a strip or a wafer that comprises the differential pressure sensors. In a case where the pressure in the pressure chamber is larger than the pressure in the air channel, the sample is retained on the chuck by the pressure difference between the opposite sides of the sample. The chuck can comprise a plurality of pins for holding the sample on a base plate of the chuck.

The probe card is used to electrically contact the differential pressure sensors on the sample. The probe card may comprise a printed circuit board (PCB) and one or more contact elements, which can be arranged in electrical contact with contact pads of the differential pressure sensors. The probe card can be, for example, a needle, vertical pin, or MEMS (Micro Electro-Mechanical System) type probe card depending on the shape and form of the contact elements. The contact elements of the probe card can, for example, be made of tungsten or a tungsten/rhenium alloy. The contact pads of the differential pressure sensors can, for example, be made of aluminium, copper, copper alloys or many types of solders such as lead-tin and tin-silver. Typically, the probe card is custom-built for each type of sample so that every differential pressure sensor on the sample can be electrically tested. The probe card can be attached to a probe card holder.

The testing device may comprise an electronic testing unit for electrically testing the differential pressure sensors on the sample. The electronic testing unit is electrically connected to the probe card and it can be arranged inside or outside the pressure chamber. The probe card provides an electrical path between the electronic testing unit and the differential pressure sensors on the sample, thereby permitting the testing and validation of the differential pressure sensors. The electronic testing unit tests the differential pressure sensors according to a test program, which defines the contents of test patterns and the sequence by which they are applied to the differential pressure sensors. The electronic testing unit may comprise a processor and a memory including computer program code, the memory and the computer program code being configured to, with the processor, cause the electronic testing unit to electrically test the differential pressure sensors.

The testing device may comprise means for changing the relative position between the chuck and the probe card. By using these means, the probe card can be arranged into different testing positions. In each testing position, the probe card is in electrical contact with one or more differential pressure sensors, which can then be electrically tested. The means for changing the relative position between the chuck and the probe card may comprise means for moving the chuck relative to the probe card and/or means for moving the probe card relative to the chuck. The means for moving the chuck relative to the probe card may comprise one or more actuators for moving the chuck in three perpendicular directions. By using the actuators, the chuck can be moved horizontally and vertically. The means for moving the chuck relative to the probe card may also comprise an actuator for rotating the chuck around an axis perpendicular to the chuck. The means for moving the chuck relative to the probe card may comprise a supporting column having a first end and a second end. The first end of the supporting column can be attached to the chuck and the second end of the supporting column to the actuators. The movement produced by the actuators is thus transferred through the supporting column to the chuck. The supporting column can be made of a metal, such as stainless steel, or other material having good mechanical properties. The means for moving the probe card relative to the chuck may comprise one or more actuators for moving the probe card in three perpendicular directions. By using the actuators, the probe card can be moved horizontally and vertically. The means for moving the probe card relative to the chuck may also comprise an actuator for rotating the probe card around an axis perpendicular to the chuck. The actuator may comprise, for example, an electrical motor operating a screw, which transfers the rotational movement to linear movement.

The testing device may comprise a digital camera for optically locating the contact elements on the probe card and the contact pads on the sample. By using this information, the contact pads of the differential pressure sensors to be tested can be aligned to the contact elements of the probe card.

The air channel is provided in the chuck. The first end of the air channel can be closed with the sample, allowing the sides of the differential pressure sensors to be exposed to different pressures. The second end of the air channel is arranged in communication with the outside of the pressure chamber. In a case where the chuck is attached to the wall of the pressure chamber, the air channel may be in communication with the outside of the pressure chamber through an opening in the wall of the pressure chamber. In a case where the chuck is located at a distance from the wall of the pressure chamber, the second end of the air channel can be connected to the opening in the wall of the pressure chamber with a connecting pipe or hose, or the like.

The air channel may comprise a plurality of channel sections having different shapes and sizes. Preferably, the first end of the air channel comprises a channel section that is essentially disc-shaped and has a diameter smaller than that of the sample, thus allowing the sample at its outer edge to be in contact with the chuck.

An advantage of the testing device according to the invention is that it enables to control the pressure on both sides of differential pressure sensors that are tested. Another advantage of the testing device according to the invention is that it enables to accurately and reliably test differential pressure sensors. Yet another advantage of the testing device according to the invention is that it enables to flatten a warped sample, such as a wafer.

The testing device according to the invention can also be used for testing other types of pressure sensors, such as absolute pressure sensors having a vacuum-sealed reference cavity.

According to an embodiment of the invention the second end of the air channel is in communication with atmosphere. The pressure prevailing in the air channel is thus atmospheric pressure.

According to an embodiment of the invention the testing device comprises means for controlling the pressure in the air channel. The means for controlling the pressure in the air channel may comprise a pump that is connected to the second end of the air channel. The pump may be connected to the second end of the air channel with a connecting pipe or hose, or the like. The pump is provided with a pressure controller for adjusting the pressure. During the testing of the differential pressure sensors, the pressure in the air channel can be, for example, in the range of 0 to 2 bar, 2 to 10 bar, 10 to 30 bar, or more than 30 bar. The pressure in the air channel is preferably smaller than the pressure in the pressure chamber. An advantage of the means for controlling the pressure in the air channel is that the pressures on both sides of the differential pressure sensors can be controlled.

According to an embodiment of the invention the first end of the air channel is provided with an air permeable support member for supporting the sample. Preferably, the air permeable support member is disc-shaped and inserted to a disc-shaped channel section at the first end of the air channel. The diameter of the air permeable support member is smaller than that of the sample, thus allowing the sample at its outer edge to be in contact with the chuck. An advantage of the air permeable support member is that it supports the sample and prevents the sample from bending, while allowing the air to permeate through the air permeable support member to the surface of the sample.

According to an embodiment of the invention the air permeable support member is made of a sintered metal or a ceramic. An advantage of the air permeable support member made of the sintered metal or the ceramic is that it can contain a large number of small holes per unit area, thus giving access of pressure to even very small differential pressure sensors.

According to an embodiment of the invention the chuck comprises a seal for preventing leakage between the chuck and the sample. The seal is attached on the outer edge of the chuck and around the first end of the air channel. The outer edge of the sample is in contact with the seal. The seal can be made of elastic material, such as elastic plastics or rubber.

The present invention also relates to a method for testing differential pressure sensors. The method according to the invention comprises holding a sample comprising the differential pressure sensors on a chuck that is arranged inside a pressure chamber, the chuck comprising an air channel having a first end closed by the sample and a second end in communication with the outside of the pressure chamber, providing a pressure difference between the pressure chamber and the air channel, and electrically contacting the differential pressure sensors with a probe card that is arranged inside the pressure chamber.

The method according to the invention enables to test differential pressure sensors in a controlled pressure environment. The first sides of the differential pressure sensors are in communication with the inside of the pressure chamber and the second sides of the differential pressure sensors are in communication with the air channel. The desired pressure difference between the sides of the differential pressure sensors can be achieved by controlling the pressure in the pressure chamber and/or the pressure in the air channel.

An advantage of the method according to the invention is that it enables to control the pressure on both sides of differential pressure sensors that are tested. Another advantage of the method according to the invention is that it enables to accurately and reliably test differential pressure sensors.

According to an embodiment of the invention the step of providing a pressure difference between the pressure chamber and the air channel comprises using a first pump connected to the pressure chamber to control the pressure in the pressure chamber. The first pump is provided with a pressure controller for adjusting the pressure. The first pump may be connected to the pressure chamber with a connecting pipe or hose, or the like. During the testing of the differential pressure sensors, the pressure in the pressure chamber can be, for example, in the range of 0 to 2 bar, 2 to 10 bar, 10 to 30 bar, or more than 30 bar.

According to an embodiment of the invention the step of providing a pressure difference between the pressure chamber and the air channel comprises using a second pump connected to the second end of the air channel to control the pressure in the air channel. The second pump is provided with a pressure controller for adjusting the pressure. The second pump may be connected to the second end of the air channel with a connecting pipe or hose, or the like. During the testing of the differential pressure sensors, the pressure in the air channel can be, for example, in the range of 0 to 2 bar, 2 to 10 bar, 10 to 30 bar, or more than 30 bar.

According to an embodiment of the invention the second end of the air channel is in communication with atmosphere. The pressure prevailing in the air channel is thus atmospheric pressure.

According to an embodiment of the invention the pressure in the pressure chamber is larger than the pressure in the air channel. An advantage of providing the pressure in the pressure chamber larger than the pressure in the air channel is that the sample retains on the chuck as a result of the pressure difference between the sides of the sample.

According to an embodiment of the invention the method comprises using a seal in the chuck to prevent leakage between the chuck and the sample. The seal is attached on the outer edge of the chuck and around the first end of the air channel. The outer edge of the sample is in contact with the seal.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

The exemplary embodiments presented in this text and their advantages relate by applicable parts to the device as well as the method according to the invention, even though this is not always separately mentioned.

### BRIEF DESCRIPTION OF THE DRAWINGS

- Fig. 1: illustrates a cross sectional view of a testing device according to a first embodiment of the invention, and
- fig. 2: illustrates a cross sectional view of a testing device according to a second embodiment of the invention.

### DETAILED DESCRIPTION OF THE DRAWINGS

The same reference signs are used of the same or like components in different embodiments.

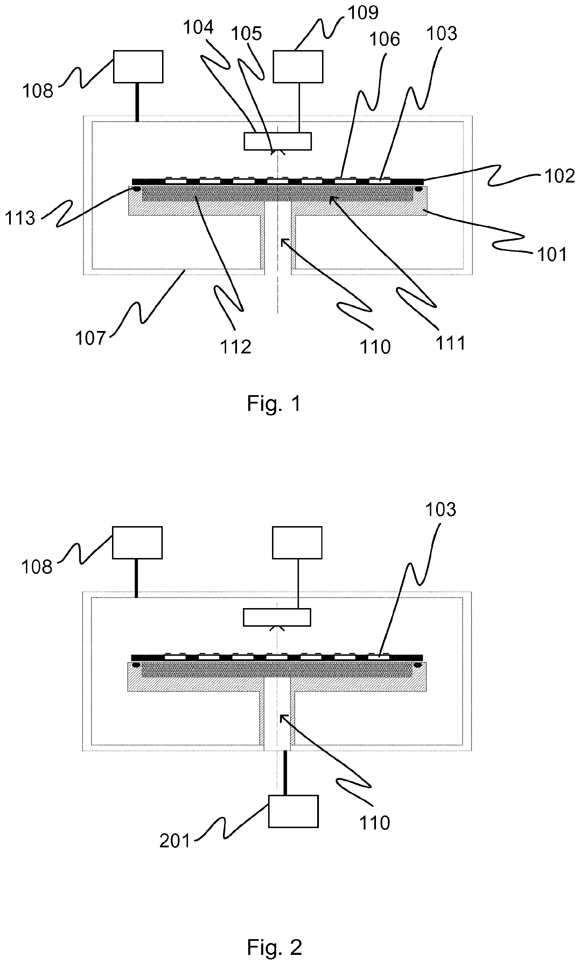

Fig. 1 illustrates a cross sectional view of a testing device according to a first embodiment of the invention. The testing device is used for testing differential pressure sensors in a controlled pressure environment.

The testing device comprises a chuck 101 holding a sample 102 that comprises differential pressure sensors 103, and a probe card 104 for electrically contacting the differential pressure sensors 103. The probe card 104 comprises contact elements 105, which can be arranged in electrical contact with contact pads 106 of the differential pressure sensors 103. The chuck 101 and the probe card 104 are arranged inside a pressure chamber 107. The pressure in the pressure chamber 107 is controlled with a pump 108 that is provided with a pressure controller for adjusting the pressure.

The testing device comprises an electronic testing unit 109 for electrically testing the differential pressure sensors 103 on the sample 102. The electronic testing unit 109 is electrically connected to the probe card 104. The electronic testing unit 109 tests the differential pressure sensors 103 according to a test program, which defines the contents of test patterns and the sequence by which they are applied to the differential pressure sensors 103.

The chuck 101 comprises an air channel 110 having a first end in communication with the inside of the pressure chamber 107 and a second end in communication with the outside of the pressure chamber 107. The first end of the air channel 110 is hermetically closed by the sample 102, which enables the sides of the differential pressure sensors 103 to be exposed to different pressures. The second end of the air channel 110 is arranged in communication with atmosphere, whereby the pressure prevailing in the air channel 110 is atmospheric pressure.

The first end of the air channel 110 comprises a channel section 111 that is essentially disc-shaped and has a diameter smaller than that of the sample 102. An air permeable support member 112 is inserted to this channel section 111 for supporting the sample 102. The air permeable support member 112 is disc-shaped, and its diameter is essentially the same as that of the channel section 111. The air permeable support member 112 allows the air to permeate to the surface of the sample 102. The chuck 101 comprises a seal 113 that is attached on the outer edge of the chuck 101 and around the first end of the air channel 110. The seal 112 prevents the leakage between the chuck 101 and the sample 102.

Fig. 2 illustrates a cross sectional view of a testing device according to a second embodiment of the invention. The testing device of fig. 2 differs from the testing device of fig. 1 in that the pressure in the air channel 110 can be controlled.

In the testing device of fig. 2, the second end of the air channel 110 is hermetically closed and a pump 201 is connected to the air channel 110 for controlling the pressure in the air channel 110. The pump 201 is provided with a pressure controller for adjusting the pressure. Due to the pumps 108 and 201, the pressures on both sides of the differential pressure sensors 103 can be controlled.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A testing device, comprising:
- a pressure chamber,
- means for controlling the pressure in the pressure chamber,
- a chuck inside the pressure chamber for holding a sample that comprises differential pressure sensors, and
- a probe card inside the pressure chamber for electrically contacting the differential pressure sensors,
**characterised in that** the chuck comprises an air channel having a first end in communication with the inside of the pressure chamber and a second end in communication with the outside of the pressure chamber, wherein the first end is arranged in such a manner that the sample when held on the chuck closes the first end.

2. The testing device according to claim 1, **characterised in that** the second end of the air channel is in communication with atmosphere.

3. The testing device according to claim 1, **characterised in that** the testing device comprises means for controlling the pressure in the air channel.

4. The testing device according to any of claims 1 to 3, **characterised in that** the first end of the air channel is provided with an air permeable support member for supporting the sample.

5. The testing device according to claim 4, **characterised in that** the air permeable support member is made of a sintered metal or a ceramic.

6. The testing device according to any of claims 1 to 5, **characterised in that** the chuck comprises a seal for preventing leakage between the chuck and the sample.

7. A method for testing differential pressure sensors, **characterised in that** the method comprises:
- holding a sample comprising the differential pressure sensors on a chuck that is arranged inside a pressure chamber, the chuck comprising an air channel having a first end closed by the sample and a second end in communication with the outside of the pressure chamber,
- providing a pressure difference between the pressure chamber and the air channel, and
- electrically contacting the differential pressure sensors with a probe card that is arranged inside the pressure chamber.

8. The method according to claim 7, **characterised in that** the step of providing a pressure difference between the pressure chamber and the air channel comprises using a first pump connected to the pressure chamber to control the pressure in the pressure chamber.

9. The method according to claim 8, **characterised in that** the step of providing a pressure difference between the pressure chamber and the air channel comprises using a second pump connected to the second end of the air channel to control the pressure in the air channel.

10. The method according to claim 7 or 8, **characterised in that** the second end of the air channel is in communication with atmosphere.

11. The method according to any of claims 7 to 10, **characterised in that** the pressure in the pressure chamber is larger than the pressure in the air channel.

12. The method according to any of claims 7 to 11, **characterised in that** the method comprises using a seal in the chuck to prevent leakage between the chuck and the sample.
